(19) 
Europäisches Patentamt
European Patent Office
Office européen des brevets

(11) **EP 2 233 631 A1**

(12) **EUROPEAN PATENT APPLICATION**
published in accordance with Art. 153(4) EPC

(43) Date of publication:
**29.09.2010 Bulletin 2010/39**

(21) Application number: **08856841.5**

(22) Date of filing: **02.12.2008**

(51) Int Cl.:
*D06C 15/00* (2006.01)     *A41D 31/00* (2006.01)
*B60J 3/02* (2006.01)      *B60N 2/44* (2006.01)
*B60R 13/02* (2006.01)     *D03D 15/00* (2006.01)

(86) International application number:
**PCT/JP2008/072221**

(87) International publication number:
**WO 2009/072642 (11.06.2009 Gazette 2009/24)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.12.2007  JP 2007317018**
              **07.08.2008  JP 2008204347**

(71) Applicant: **Teijin Fibers Limited**
**Osaka-shi, Osaka 541-0054 (JP)**

(72) Inventor: **FUKUNAGA, Migifumi**
**Osaka-shi**
**Osaka 541-0054 (JP)**

(74) Representative: **Hallybone, Huw George**
**Carpmaels & Ransford**
**One Southampton Row**
**London**
**WC1B 5HA (GB)**

(54) **PROCESS FOR PRODUCTION OF FABRICS, FABRICS AND TEXTILE GOODS**

(57)     There is provided a process for production of fabrics that vary in glossiness depending on the viewing angle without loss of soft hand quality and that have a highly aesthetic appearance, as well as fabrics and fiber products obtained by the process. The process for production of fabrics of the invention is **characterized by** pressurized heat treatment of a fabric containing an organic fiber A with a monofilament diameter of 50-1500 nm, and having a woven or knitted texture. The highly aesthetic fabric of the invention also contains an organic fiber B with a monofilament diameter larger than 1500 nm, as an additional fiber.

Fig.4

a REGION          b REGION

80 SATIN WARP    64 GABARDINE WARP

**Description**

Technical Field

The present invention relates to a process for production of fabrics that vary in glossiness depending on the viewing angle without loss of soft hand quality and that have a highly aesthetic appearance, to fabrics produced by the production process, and to fiber products obtained using the fabrics.

Background Art

Glossy woven or knitted fabrics that have been proposed in the prior art include fabrics whose surface layers have been hot-pressure treated by calendering or the like, fabrics wherein the fibers on the surface layer have been textured in the fiber length direction to take advantage of fiber gloss, fabrics with coatings formed on the surface layers with resins or the like, and methods of interlacing of surface-smooth fibers of films and the like (see Japanese Examined Patent Publication SHO No. 61-1546, for example). These are all aimed at producing gloss by flattening the fabric surface layer, but they have poor variation in glossiness from different viewing angles, and it has not been possible to achieve a wet glossy feel, or a water surface-like glossy feel. When a resin layer is used to exhibit glossiness, the soft hand quality is impaired by the hardness of the fibers even with interlacing of fibers with smooth surfaces produced by the film of the resin coating. Ultrafine fibers are known from, for example, Japanese Unexamined Patent Publication No. 2007-291567.

Fabrics employing ultrafine fibers exhibit the characteristic soft hand quality of the ultrafine fibers and have therefore been extensively developed in the fields of clothing, inner wear, sportswear and the like (see Japanese Unexamined Patent Publication No. 2003-41432, Japanese Unexamined Patent Publication No. 2004-162244, Japanese Unexamined Patent Publication No. 2005-23466 and Japanese Unexamined Patent Publication No. 2007-2364, for example). However, fabrics composed of ultrafine fibers and also having a highly aesthetic appearance have not been proposed.

DISCLOSURE OF THE INVENTION

The present invention has been accomplished in light of the background art described above, and its object is to provide a process for production of fabrics that vary in glossiness depending on the viewing angle without loss of soft hand quality and that have a highly aesthetic appearance, as well as fabric and fiber products.

As a result of much diligent research directed toward achieving the aforestated object, the present inventors have discovered that pressurized heat treatment of the surface of a woven or knitted fabric containing ultrafine fibers can yield a woven or knitted fabric with glossiness that varies depending on the viewing angle without impairing the soft hand quality, and upon further ardent research, the invention has been completed.

The invention provides a process for production of a fabric characterized by pressurized heat treatment of a fabric containing organic fiber A with a monofilament diameter of 50-1500 nm, and having a woven or knitted texture.

The pressurized heat treatment is preferably calendering. The conditions for calendering are preferably a temperature in the range of 170-200°C and a linear pressure in the range of 250-20,000 N/cm. The organic fiber A is preferably a polyester multifilament. The organic fiber A is preferably fiber obtained by dissolving removal of the sea components of sea-island composite fibers, which are composed of sea components and island components. The fabric is preferably composed only of the organic fiber A.

The fabric also preferably contains an organic fiber B with a monofilament diameter larger than 1500 nm, as an additional fiber. The organic fiber B is preferably cotton fiber, polyester fiber, hemp fiber, nylon fiber or viscose fiber. Organic fiber A and organic fiber B are preferably exposed on either or both the front and back sides of the fabric, and the organic fiber A and organic fiber B are preferably colored with different colors. In addition, either or both the front and back sides of the fabric preferably have a regions composed solely of the organic fiber A or composed of the organic fiber A and organic fiber B, and b regions composed solely of the organic fiber B. The a regions are preferably in shapes of lines, characters, letters, numerals or images.

According to the invention there are also provided fabrics produced by the aforementioned production process. The woven or knitted density of such fabrics is preferably in the range of 180-360/2.54 cm warp and 150-360/2.54 cm weft. The difference ΔRR between the 60 degree mirror reflectivity and 20 degree mirror reflectivity as defined below is preferably 7.0 or greater. The 60 degree mirror reflectivity and 20 degree mirror reflectivity are the mirror reflectivity at a measuring angle of 60 degrees and a measuring angle of 20 degrees, respectively, using a PG-1M glossmeter by Nihon Kogyo Co., Ltd. according to JIS-Z8741, and ΔRR is calculated by the following formula.

$$\Delta RR = (60 \text{ degree mirror reflectivity}) - (20 \text{ degree}$$
$$\text{mirror reflectivity})$$

The a regions preferably have a textile density of 150-360/2.54 cm as the warp density and 150-360/2.54 cm as the weft density. Also, the organic fiber A and/or the organic fiber A and organic fiber B are preferably heat sealed at the a regions. The surface roughness is preferably no greater than 700 nm at the a regions. The surface roughness is the difference in heights of adjacent hills and valleys, and is calculated as the average value of 4 arbitrarily selected and measured locations.

According to the invention there are provided fiber products composed of the aforementioned fabrics, for uses including sportswear, inner wear, men's wear, women's wear, interior chair upholstery, interior curtains, automobile ceiling materials, automobile side materials, automobile sidings, automobile headrests, automobile sun visors, automobile sheets, wallets, shoe coverings, general purpose belts, handbags, electrical appliance casings and umbrella cloths.

Brief Description of the Drawings

Fig. 1 is a schematic diagram showing an example of a spinneret used for spinning of sea-island composite fibers suitable for use according to the invention.
Fig. 2 is a schematic diagram showing another example of a spinneret used for spinning of sea-island composite fibers suitable for use according to the invention.
Fig. 3 shows a pattern of a regions that may be used for the invention.
Fig. 4 shows the weaving pattern used in Example 3.
Fig. 5 is a photograph showing the outer appearance of the woven fabric obtained in Example 1.
Fig. 6 is a photograph showing the outer appearance of the woven fabric obtained in Example 3.

Best Mode for Carrying Out the Invention

The embodiments of the invention will now be explained in detail.

First, it is important for the organic fiber A used for the invention to have a monofilament diameter in the range of 50-1500 nm, preferably 100-1000 nm and most preferably 400-800 nm. In terms of the monofilament size, this monofilament diameter range corresponds to 0.00002-0.022 dtex. A monofilament diameter of less than 50 nm will not only hamper production but is also undesirable in practical terms since it lowers the strength of the fibers. Conversely, a monofilament diameter of greater than 1500 nm may interfere with the major objects of the invention, which are to exhibit varying glossiness depending on the viewing angle and provide a new highly aesthetic outer appearance. When the cross-sectional monofilament shape is an atypical cross-section other than a circular cross-section, the monofilament diameter is the circumscribed circle diameter. The monofilament diameter can be measured by photographing a transection of a fiber with a transmission electron microscope.

The type of fiber used as the organic fiber A is not particularly restricted, but it is preferably a fiber composed of polyester in order to obtain varying glossiness depending on the viewing angle and a obtain a highly aesthetic fabric, as the major objects of the invention. Preferred polyesters include polyethylene terephthalate, and polytrimethylene terephthalate, polybutylene terephthalate, stereocomplex polylactic acid, polylactic acid and polyesters copolymerized with third components. There may also be used material- or chemical-recycled polyesters, and polyesters obtained using catalysts containing specific phosphorus compounds and titanium compounds, such as described in Japanese Unexamined Patent Publication No. 2004-270097 or Japanese Unexamined Patent Publication No. 2004-211268. If necessary, such fibers may also comprise one or more micropore-forming agents, cationic dyeable dyes, antistaining agents, heat stabilizers, fluorescent whitening agents, delustering agents, coloring agents, humectants or inorganic fine particles, in amounts that do not interfere with the object of the invention. The organic fiber A is most preferably fiber obtained by dissolving removal of the sea components of sea-island composite fibers that are composed of sea components and island components, as described below.

The organic fiber A may be in the form of staple fibers, but it is most preferably in the form of multifilaments (long filaments) in order to obtain highly aesthetic fabrics. The number of monofilaments in such multifilaments is preferably at least 500 (more preferably 2000-10,000). The total fineness (product of the single fiber size and number of filaments) is preferably in the range of 5-150 dtex.

A fabric is then produced comprising the organic fiber A. It is essential for the fabric to have a woven or knitted texture, as a nonwoven fabric structure may not result in the new outer appearance having variable glossiness depending on the viewing angle, which is the object of the invention. A fabric using organic fiber with a monofilament diameter of 50-1500 nm may be obtained by knitting the fabric with organic fiber A with a monofilament diameter of 50-1500 nm, but preferably the sea-island composite fiber described below is used for knitting of the fabric and then the sea component of the sea-island composite fiber is removed by dissolution.

Specifically, first a sea component polymer and island component polymer are prepared for the sea-island composite fiber.

The sea component polymer may be any polymer with a dissolution rate ratio of at least 200 with the island component, but polyester, polyamide, polystyrene and polyethylene are especially preferred for their satisfactory fiber formability. As examples of polymers that are readily soluble in aqueous alkali solutions, there are preferred polylactic acid, ultrahigh molecular weight polyalkylene oxide condensed polymers, polyethylene glycol compound-copolymerized polyesters, and polyethylene glycol-based compound/5-sodiumsulfoisophthalic acid-copolymerized polyesters. Nylon-6 is soluble in formic acid, while polystyrene and polyethylene are very highly soluble in organic solvents such as toluene. In order to achieve both high alkaline solubility and sea-island cross-section formability, the preferred polyester-based polymers are polyethylene terephthalate-copolymerized polyesters with an intrinsic viscosity of 0.4-0.6, obtained by copolymerizing 6-12 mol% 5-sodiumsulfoisophthalic acid and 3-10 wt% polyethylene glycol with a molecular weight of 4000-12,000. In this case, 5-sodiumisophthalic acid contributes to improved hydrophilicity and melt viscosity, while polyethylene glycol (PEG) improves the hydrophilicity. A greater molecular weight of PEG has an effect of improving the hydrophilicity, presumably due to its higher-order structure, but because the reactivity becomes hindered and a blend is formed, it is not preferred from the viewpoint of heat resistance and spinning stability. If the copolymerization degree is greater than 10 wt% the original melt viscosity will be lowered, thus hindering the object of the invention. Both components are therefore copolymerized in the ranges specified above.

On the other hand, the polymer of the island component may be any polyester polymer so long as it has a different dissolution rate than the sea component, although it is preferably a polyester such as polyethylene terephthalate, or polytrimethylene terephthalate, polybutylene terephthalate stereocomplex polylactic acid, polylactic acid or a polyester copolymerized with a third component.

The sea-island composite fiber composed of the sea component polymer and island component polymer described above preferably has a sea component with a larger melt viscosity than the melt viscosity of the island component in melt spinning. When the components are in this relationship, even a composite weight ratio of the sea component of as low as below 40% will not easily result in a situation where the islands become joined or most of the island component becomes connected to form a non-sea-island composite fiber.

The preferred melt viscosity ratio (sea/island) is in the range of 1.1-2.0 and especially 1.3-1.5. If the ratio is below 1.1 the island component will tend to become joined during melt spinning, while if it is above 2.0 the difference in viscosity will become too significant, thus tending to hinder spinning.

A greater number of islands will increase productivity when the sea component is removed by dissolution to produce ultrafine fibers, and the number is therefore preferred to be 100 or greater (more preferably 300-1000). An excessive number of islands, however, will not only increase production cost for the spinneret but will also tend to reduce the actual working accuracy, and therefore the number is preferably no greater than 10,000.

The island component must have a diameter in the range of 50-1500 nm. The islands in the sea-island composite fiber cross-section preferably have uniform diameters in order to improve the quality and durability of fabrics composed of ultrafine multifilaments obtained by removing the sea component.

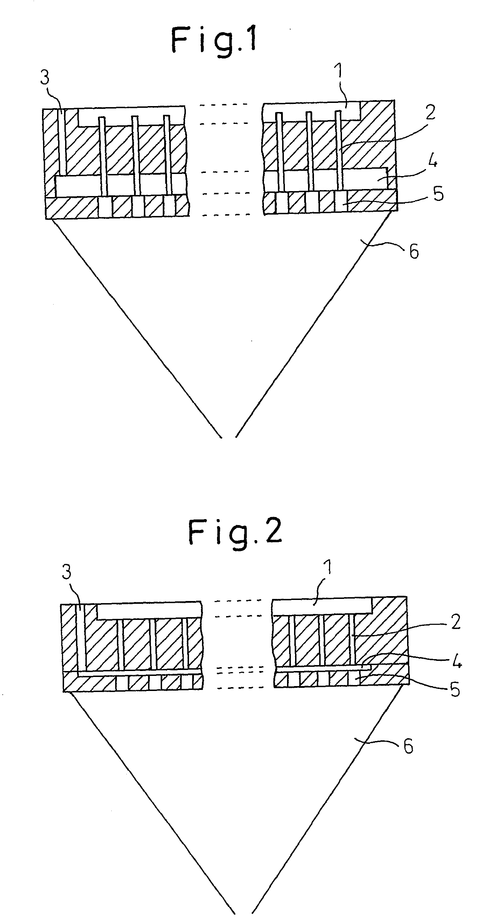

The spinneret used for melt spinning may be any desired one having a group of hollow pins or micropores for formation of the island component. For example, it may be a spinneret that merges the island components extruded from hollow pins or micropores with the sea component flow in a channel that fills the area between them, with the sea-island cross-section being formed by compression. A preferred example of a spinneret is shown in Fig. 1 and Fig. 2, although there is no limitation to this design. Fig. 1 shows a system wherein hollow pins are used for discharge into a sea component resin reservoir and merged compression, and Fig. 2 shows a method of forming islands with a micropore system instead of hollow pins.

The discharged composite fiber with a sea-island cross-section is solidified by cooling air and melt spun at preferably 400-6000 m/min, and then taken up. The obtained unstretched filament is either formed into a composite fiber with the desired strength, ductility and heat shrinkage property by a separate stretching step, or instead of being taken up first, it may be first pulled out onto a roller at a fixed speed and then stretched and taken up.

For high-efficiency production of sea-island composite fibers with especially fine island diameters, it is preferred to employ a flow-drawing step wherein the fiber size is simply thinned without altering the fiber structure, before ordinary neck stretching with oriented crystallization (oriented crystallization stretching). In order to facilitate flow-drawing, an aqueous medium with a large heat capacity is preferably used for uniform preheating of the fibers, and stretching is carried out at a low speed. This will facilitate formation of a flow state during stretching, thus allowing the stretching to be accomplished more easily without further developing the microstructure of the filament. For this process, the sea component and island component are both preferably polymers with glass transition temperatures of no higher than 100°C, and most preferably polyesters such as polyethylene terephthalate, polybutylene terephthalate, polylactic acid, polytrimethylene terephthalate or the like. Specifically, the process is preferably carried out by immersion in a hot water bath for uniform heating in a range of 60-100°C and preferably 60-80°C, with a draw ratio of 10-30, a supply speed of 1-10 m/min, and a take-up speed of no greater than 300 m/min and especially in the range of 10-300 m/min. If the preheating temperature is insufficient or the stretching speed is too high, it will not be possible to achieve the desired high-factor stretching.

The stretched yarn in the resulting flow state is subjected to oriented crystallization stretching by an established method at a temperature of 60-220°C, in order to improve the mechanical properties such as strong ductility. If the stretching conditions are outside of this temperature range, the physical properties of the obtained fiber will be inadequate. The draw ratio will differ depending on the melt spinning conditions, the flow-drawing conditions, the oriented crystallization stretching conditions, etc., but stretching may be carried out at 0.6-0.95 times the maximum draw ratio at which stretching can be accomplished under the oriented crystallization stretching conditions described above.

The sea-island composite weight ratio (sea:island) in the sea-island composite fiber obtained in this manner is preferably in the range of 40:60-5:95 and more preferably in the range of 30:70-10:90. This range is preferred because it will allow the thickness of the sea component between the islands to be reduced, thus facilitating dissolving removal of the sea component and conversion of the island component to an ultrafine fiber. A sea component proportion of greater than 40% will result in an excessively large sea component thickness, while a proportion of less than 5% will reduce the amount of sea component, tending to cause joining between the islands.

The sea component thickness between islands in the sea-island composite fiber is preferably no greater than 500 nm and especially in the range of 20-200 nm, because if the thickness exceeds 500 nm, dissolution of the island components will proceed while the thick sea components are being removed by dissolution, thus not only reducing homogeneity between the island components, but also tending to result in problems during wear, such as fluff and pilling, as well as dyeing spots.

By using the sea-island composite fiber described above to produce a textile fabric with a woven or knitted texture by an ordinary method, and then removing the sea component by dissolution with an aqueous alkali solution, it is possible to obtain a fabric containing organic fiber A with a monofilament diameter of 50-1500 nm and having a woven or knitted texture. Various additional processing such as dyeing or hydrophilic treatment may also be carried out before and/or after the dissolving removal treatment of the sea component with the aqueous alkali solution.

This type of fabric is most preferably composed of only the organic fiber A with a monofilament diameter of 50-1500 nm, but other fibers may also be included in amounts of no greater than 30 wt% with respect to the fabric weight, For example, in order to impart a water absorbing property to the fabric, irregular cross-section fibers or fibers having cracks and voids on the monofilament surfaces may be used.

In such fabrics, the woven or knitted fabric texture is not restricted and may be formed by ordinary methods, and for example, the weaving texture may be a three foundation weave such as plain weave, twill weave or satin weave, a derivative weave such as derivative twill weave, or a half double weave such as warp backed weave or weft backed weave. Preferred examples for knitted fabrics include half textures, half-base textures or satin textures obtained using 2 reeds or 3 reeds.

The front and/or back side of the fabric is then subjected to pressurized heat treatment, and preferably calendering, to obtain a fabric with a novel outer appearance. The conditions for calendering are preferably a temperature in the range of 170-200°C and a linear pressure in the range of 250-20,000 N/cm (27-2041 kgf/cm).

The interlacing density in the fabric with a novel outer appearance is preferably a high-density from the viewpoint of exhibiting gloss, and preferably both the warp and weft is in the range of 200-380/2.54 cm. If the fabric density is below this range it may not be possible to obtain sufficient gloss. Conversely, if the warp and weft density of the fabric is above this range it may be become difficult to accomplish knitting or weaving. The thickness of the fabric is preferably in the range of 0.4-1.5 mm.

Such a fabric will exhibit a novel outer appearance with glossiness that varies depending on the viewing angle, without impairing the soft hand quality. The difference ΔRR between the 60 degree mirror reflectivity and 20 degree mirror reflectivity as defined below is preferably 7.0 or greater. A fabric having such an ΔRR may be obtained by calendering of a fabric comprising organic fibers with a monofilament diameter of 50-1500 nm, under the conditions described above. The 60 degree mirror reflectivity and 20 degree mirror reflectivity are the mirror reflectivity at a measuring angle of 60 degrees and a measuring angle of 20 degrees, respectively, using a PG-1M glossmeter by Nihon Kogyo Co., Ltd. according to JIS-Z8741, and ΔRR is calculated by the following formula.

$$\Delta RR = (60 \text{ degree mirror reflectivity}) - (20 \text{ degree mirror reflectivity})$$

Such fabrics can be imparted with functionality by additional dyeing, embossing, alkali reduction treatment, colored printing, water repellency treatment or processing using ultraviolet blocking agents, antimicrobial agents, deodorants, insecticides, luminous agents, retroreflective agents, minus ion generators and the like, before and/or after the calendering.

When the fabric includes a separate organic fiber B in addition to the organic fiber A, it is important for the monofilament diameter of the organic fiber B to be greater than 1500 nm. If the monofilament diameter is less than 1500 nm, the difference from the organic fiber A will be insufficient to yield a highly aesthetic fabric.

There are no particular restrictions on the type of fiber used for organic fiber B, but it is preferably cotton, or the aforementioned polyester fiber, hemp fiber, nylon fiber or viscose fiber. Cotton is particularly preferred for coloration with different colors from the organic fiber A. When both the organic fiber A and organic fiber B are polyester fibers, a method may be employed wherein one is a spun-dyed polyester fiber and the other is a cation-dyeable polyester fiber and is dyed using a cationic dye, for coloration of the organic fiber A and organic fiber B with different colors.

The form of the organic fiber B may be as staple fibers or multifilaments (filaments). When multifilaments, the single fiber size is preferably greater than 0.1 dtex (preferably 0.2-6 dtex). There are no particular restrictions on the number of filaments, but it is preferably in the range of 1-300 (more preferably 40-200).

In the fabric of the invention, the organic fiber A and organic fiber B are exposed on either or both the front and back sides of the fabric, and the organic fiber A and organic fiber B are colored with different colors. The phrase "different colors" means that the luminance and/or color tone differ, and for example, they may be the same colors with different gradations.

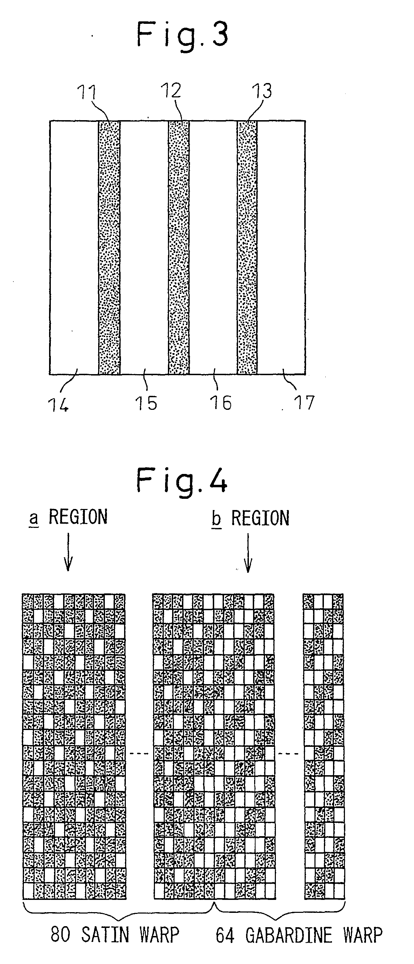

The face of the fabric preferably has a regions composed solely of the organic fiber A or composed of the organic fiber A and organic fiber B, and b regions composed solely of organic fiber B. The a regions, in particular, preferably have the shapes of lines, curves, circles, ovals, squares, polygons, characters, letters, numerals or images. Most preferably, they have the shapes of lines, characters, letters, numerals or images. They may also have the shapes of animals or fictional characters. The area of each a region is preferably at least 25 mm$^2$. Fig. 3 is a schematic view of a configuration with a plurality of linear a regions.

A fabric comprising the organic fiber B according to the invention may be obtained by using the sea-island composite fiber (fiber for organic fiber A) and the organic fiber B for ordinary weaving or knitting of a fabric with a woven or knitted texture, and then removing the sea component by dissolution with an aqueous alkali solution to convert the sea-island composite fiber into organic fiber A with a monofilament diameter of 50-1500 nm. Dyeing of the fabric can produce different coloration in the organic fiber A and organic fiber B. The method for coloring the organic fiber A and organic fiber B with different colors may be a method with different fiber types, or a method with spun-dyed fibers for organic fiber A and/or organic fiber B. For example, a polyester fiber composed of a polyester such as polyethylene terephthalate may be used as organic fiber A and cotton fiber used as organic fiber B, and a disperse dye used for dyeing of the fabric to achieve coloration of organic fiber A with a deeper color than organic fiber B.

In such a fabric, the fabric texture may be a texture in which the organic fiber A and organic fiber B are exposed on the surface and/or back of the fabric, and for example, the weaving texture may be a three foundation weave such as plain weave, twill weave or satin weave, a derivative weave such as derivative twill weave, or a half double weave such as warp backed weave or weft backed weave. Examples for knitted fabrics include half textures, half-base textures or satin textures obtained using 2 reeds or 3 reeds. Preferred among these are woven and knitted textures that have a regions composed solely of the organic fiber A or composed of the organic fiber A and organic fiber B, and b regions composed solely of organic fiber B, on either or both the front and back sides of the fabric. The a regions are most preferably in shapes of lines, characters, letters, numerals or images.

The woven or knitted density is preferably a warp density of 150-360/2.54 cm and a weft density of 150-360/2.54 cm in the a regions of the fabric, in order to reduce the irregularities on the front and/or back sides of the a regions and thus enhance the aesthetic appearance. The organic fiber A and/or the organic fiber A and organic fiber B are preferably heat sealed at the a regions, for further enhanced aesthetic appearance. The surface roughness is preferably no greater than 700 nm at the a regions. The surface roughness is the difference in heights of adjacent hills and valleys, and is calculated as the average value of 4 arbitrarily selected and measured locations.

In order to heat seal the organic fiber A, and/or the organic fiber A and organic fiber B, and reduce the surface roughness at the a regions to below 700 nm, the front and/or back side of the fabric is subjected to pressurized heat treatment, preferably calendering. The conditions for calendering are preferably a temperature in the range of 170-200°C and a linear pressure in the range of 250-20,000 N/cm (27-2041 kgf/cm).

Since the organic fiber A and organic fiber B are exposed on either or both the front and back sides of the fabric and the organic fiber A and organic fiber B are colored with different colors in fabric obtained in this manner, an excellent aesthetic appearance is exhibited.

A particularly superior aesthetic appearance is exhibited when the a regions composed of the organic fiber A alone or the organic fiber A and organic fiber B and the b regions composed of the organic fiber B alone are present on either or both the front and back sides of the fabric, the a regions have the shapes of lines, curves, circles, ovals, squares, polygons, characters, letters, numerals or images, and the organic fiber A and/or the organic fiber A and organic fiber B are heat sealed at the a regions, as described above.

Other fibers different from the organic fibers A and B may also be included in the fabric containing the organic fiber B according to the invention, so long as their content is no greater than 30 wt% with respect to the fabric weight. Various processing steps in addition to dyeing may also be applied to impart functionality, such as embossing, alkali reduction treatment, colored printing, water repellency treatment or processing using ultraviolet blocking agents, antimicrobial agents, deodorants, insecticides, luminous agents, retroreflective agents, minus ion generators and the like.

Fiber products according to the invention are composed of the aforementioned fabric and are selected from among sportswear, inner wear, men's wear, women's wear, interior chair upholstery, interior curtains, automobile ceiling materials, automobile side materials, automobile sidings, automobile headrests, automobile sun visors, automobile sheets, wallets, shoe coverings, general purpose belts, handbags, electrical appliance casings and umbrella cloths. Since such fiber products make use of fabrics having the novel outer appearance described above, they exhibit glossiness that varies depending on the viewing angle, without impairing the soft hand quality, and also have an excellent aesthetic appearance. Fiber products according to the invention also include fabrics of the invention that have been coated with transparent resins.

Examples

The present invention will now be explained in greater detail by examples and comparative examples, with the understanding that the invention is in no way limited only to the examples. The values measured in the examples were obtained by the following methods.

<Dissolution rate>

Filaments of the sea and island polymers were taken up at a spinning speed of 1000-2000 m/min from a nozzle with a diameter of 0.3 mm and a length of 0.6 mm x 24 holes and stretched to a residual elongation in the range of 30-60%, to obtain an 84 dtex/24 fil multifilament. The reducing rate was calculated from the dissolution time and degree of dissolution with a liquor to goods ratio of 100, at a temperature for dissolution in each solvent.

<Monofilament diameter>

This was measured by photographing a transection of a fiber with a transmission electron microscope. Measurement was performed 5 times and the average value was calculated.

<Fabric thickness>

This was measured according to JIS L 1096 8.5.

<Measurement of glossy feel>

The mirror reflectivities at a measuring angle of 60 degrees and a measuring angle of 20 degrees were measured using a PG-1M glossmeter by Nihon Kogyo Co., Ltd. according to JIS-Z8741, and the difference ΔRR between the 60 degree mirror reflectivity and 20 degree mirror reflectivity was calculated by the following formula.

$$\Delta RR = (60 \text{ degree mirror reflectivity}) - (20 \text{ degree mirror reflectivity})$$

<Soft feel>

The soft feel of the fabric was evaluated by three testers and judged on a 3-level scale (3: soft, 2: normal, 1: not soft).

<Surface roughness>

A transmission electron microscope was used to measure the difference in heights of adjacent hills and valleys, as the surface roughness. Measurement was made at 4 arbitrary locations and the average value was calculated.

[Example 1]

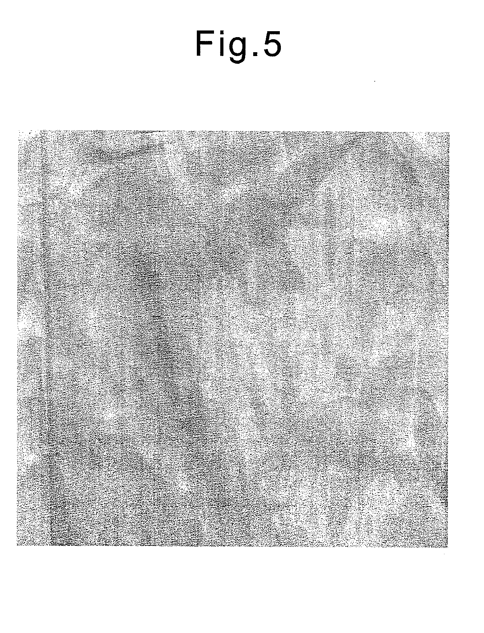

Using polyethylene terephthalate as the island component and polyethylene terephthalate copolymerized with 6 mol% 5-sodiumsulfoisophthalic acid and 6 wt% polyethylene glycol with a number-average molecular weight of 4000 as the sea component (melting rate ratio (sea/island) = 230), a sea-island composite unstretched fiber (sea:island = 40: 60, number of islands = 500) was used for melt spinning at a spinning temperature of 280°C and a spinning speed of 1500 m/min and taken up. The obtained unstretched filament was stretched with a roller at a stretching temperature of 80°C and a draw ratio of 2.5 and then heat setting at 150°C and taken up. The obtained sea-island composite drawn yarn had a size of 56 dtex/10 fil, and observation of the filament transection with a transmission electron microscope (TEM) revealed round island shapes with an island diameter of 520 nm. The 56 dtex/10 fil polyethylene terephthalate multifilament was run at a running speed of 100 m/min and a drying temperature of 100°C using a Unisizer (Yamada, K.K.) with a sizing agent by Goo Chemical Co., Ltd., to prepare a warp yarn, and then warping was carried out using a sectional warper by Suzuki Wiper, K.K. Next, the yarns were used as warp and weft yarns for weaving, to produce a plain woven fabric with a warp density of 110/cm and a weft density of 21.1/cm. After subsequent 30% alkali reduction treatment, the fabric was scoured at 60°C and dyed at 120°C. It was then dried at 130°C for 3 minutes and subjected to calendering at 180°C, 2195 N/cm (224 kgf/cm), and then padded in a fluorine-based water-repellent agent solution, squeezed at a pickup of 70% and heat treated at 130°C for 45 seconds for fluorine coating, to obtain a fabric with a warp density of 132.3/cm and a weft density of 88.2/cm (a fabric with a novel outer appearance). The outer appearance of the obtained fabric is shown in Fig. 5.

The fabric was glossy on the calendered surface and exhibited a soft feel. The mirror reflectivities at a measuring angle of 60 degrees and a measuring angle of 20 degrees were measured using a PG-1M glossmeter by Nihon Kogyo Co., Ltd. according to JIS-Z8741, and the difference ΔRR between the 60 degree mirror reflectivity and 20 degree mirror reflectivity was calculated to be 8.52. The obtained fabric was composed entirely of organic fiber A with a monofilament diameter of 520 nm.

[Example 2]

The same procedure was followed as in Example 1, but without the fluorine coating in Example 1. The fabric was glossy on the calendered surface and exhibited a soft feel. The mirror reflectivity at a measuring angle of 60 degrees and a measuring angle of 20 degrees were measured using a PG-1M glossmeter by Nihon Kogyo Co., Ltd. according to JIS-Z8741, and the difference ΔRR between the 60 degree mirror reflectivity and 20 degree mirror reflectivity was calculated to be 8.40. The obtained fabric was composed entirely of organic fiber A with a monofilament diameter of 520 nm.

[Comparative Example 1]

An ordinary 66 dtex/36 fil polyethylene terephthalate multifilament (product of Teijin Fibers, Ltd.) was run at a running speed of 100 m/min and a drying temperature of 100°C using a Unisizer (Yamada, K.K.) with a sizing agent by Goo Chemical Co., Ltd., to prepare a warp yarn, and then warping was carried out using a sectional warper by Suzuki Wiper, K.K. The warp yarn was then used for weaving.

This warp yarn was used at a warp density of 84.4/cm and 167 dtex/72 fil polyethylene terephthalate yarn (product of Teijin Fibers, Ltd.) was used as weft yarn at a weft density of 34.8/cm, for weaving in an ordinary satin weave texture, after which the obtained fabric was dyed by an ordinary method and subjected to calendering at 180°C, 2195 N/cm (224 kgf/cm). The resulting fabric structure had low surface gloss and a hard feel. The mirror surface glossiness was measured using a PG-1M glossmeter by (Nippon Denshoku Industries Co., Ltd.) according to JIS Z8741, and the difference ΔRR between the angle-dependent mirror reflectivity of the fabric (60 degree reflectivity - 20 degree reflectivity) was measured to be 1.41. The monofilament diameter of the 66 dtex/36 fil polyethylene terephthalate multifilament was 12.9 μm and the monofilament diameter of the 167 dtex/72 fil polyethylene terephthalate yarn was 20.8 μm in the obtained fabric.

[Example 3]

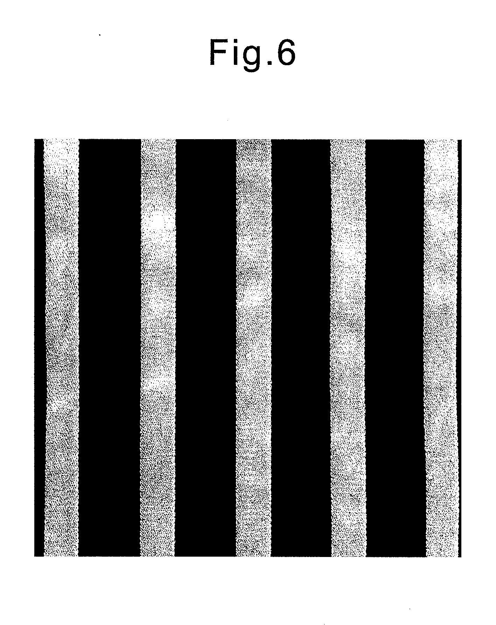

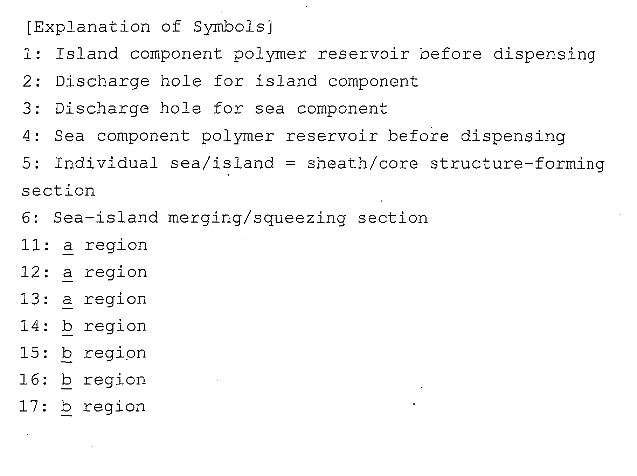

Using polyethylene terephthalate as the island component and polyethylene terephthalate copolymerized with 6 mol% 5-sodiumsulfoisophthalic acid and 6 wt% polyethylene glycol with a number-average molecular weight of 4000 as the sea component (melting rate ratio (sea/island) = 230), a sea-island composite unstretched fiber (sea:island = 40: 60, number of islands = 500) was used for melt spinning at a spinning temperature of 280°C and a spinning speed of 1500 m/min and taken up. The obtained unstretched filament was stretched with a roller at a stretching temperature of 80°C and a draw ratio of 2.5 and then heat set at 150°C and taken up. The obtained sea-island composite drawn yarn had a size of 56 dtex/10 fil, and observation of the filament transection with a transmission electron microscope (TEM) revealed round island shapes with an island diameter of 700 nm. A 56 dtex/10 fil sea-island composite drawn yarn (fiber for organic fiber A) was run at a running speed of 100 m/min and a drying temperature of 100°C using a Unisizer (Yamada, K.K.) with a sizing agent by Goo Chemical Co., Ltd., to prepare an a region warp yarn. Separately, a cotton 60 two-ply yarn was prepared as the b region warp yarn, and was used for warping with the a region warp yarn using a sectional warper by Suzuki Wiper, K.K. The warp yarn was then used, together with only the cotton 60 two-ply yarn as the weft yarn, for weaving according to the weaving pattern shown in Fig. 4. A Jacquard open loom was used for weaving with a b region warp density of 31.7/cm, an a region warp density of 79.1/cm and a weft yarn density of 34.0/cm, for a satin weave at the a regions, to obtain a greige having a b region warp density of 31.7/cm, an a region warp density of 79.1/cm and a weft density of 34.3/cm. After subsequent 30% alkali reduction treatment, the fabric was scoured at 60°C and dyed at 120°C. The monofilament diameter of the cotton 60 two-ply yarn was 11.4 μm. After drying at 130°C for 3 minutes, it was subjected to calendering at 2195 N/cm (224 kgf/cm) for heat sealing of the satin weave sections, to obtain a woven fabric with a b region warp density of 41.0/cm, an a region warp density of 102.5/cm and a weft density of 37.8/cm. The surface of the a regions of the obtained fabric was smooth, and a fabric with a highly intricate design was obtained. Upon measuring the surface roughness of the a regions of the fabric at 4 locations using a transmission electron microscope, the surface roughness values were found to be 450 nm, 530 nm, 290 nm and 190 nm, for an average of 365 nm. In this fabric, the a regions and b regions were linear (striped) as shown in Fig. 3. The outer appearance of the obtained fabric is shown in Fig. 6.

The fabric was then used for sewing of sportswear, and an aesthetic appearance was exhibited.

[Comparative Example 2]

Weaving, dyeing and calendering were carried out in the same manner as Example 3, except that an ordinary 56 dtex/144 fil polyethylene terephthalate multifilament (product of Teijin Fibers, Ltd., monofilament diameter: 5.9 μm) was used as the warp yarn for the a regions in Example 3. In the obtained fabric, the surface of the a regions were glossy but lacked smoothness, and measurement of the smoothness of the a regions of the fabric with a transmission electron microscope revealed a surface roughness of greater than 800 nm.

Industrial Applicability

According to the invention there is provided a process for production of fabrics that vary in glossiness depending on the viewing angle without loss of soft hand quality and that have a highly aesthetic appearance, as well as fabrics and fiber products obtained by the process, and therefore the invention has very high industrial value.

**Claims**

1.  A process for production of a fabric **characterized by** pressurized heat treatment of a fabric containing organic fiber A with a monofilament diameter of 50-1500 nm, and having a woven or knitted texture.

2.  A process for production of a fabric according to claim 1, wherein the pressurized heat treatment is calendering.

3.  A process for production of a fabric according to claim 2, wherein the conditions for calendering are a temperature of 170-200°C and a linear pressure of 250-20,000 N/cm.

4.  A process for production of a fabric according to claim 1, wherein the organic fiber A is a polyester multifilament.

5.  A process for production of a fabric according to claim 1, wherein the organic fiber A is fiber obtained by dissolving removal of the sea components of sea-island composite fibers that are composed of sea components and island components.

6.  A process for production of a fabric according to claim 1, wherein the fabric is composed entirely of the organic fiber A.

7.  A process for production of a fabric according to claim 1, wherein the fabric includes an organic fiber B with a monofilament diameter of greater than 1500 nm as an additional fiber.

8.  A process for production of a fabric according to claim 7, wherein the organic fiber B is cotton fiber, polyester fiber, hemp fiber, nylon fiber or viscose fiber.

9. A process for production of a fabric according to claim 7, wherein the organic fiber A and organic fiber B are exposed on either or both the front and back sides of the fabric, and the organic fiber A and organic fiber B are colored with different colors.

10. A process for production of a fabric according to claim 7, wherein either or both the front and back sides of the fabric have a regions composed solely of the organic fiber A or composed of the organic fiber A and organic fiber B, and b regions composed solely of the organic fiber B.

11. A process for production of a fabric according to claim 7, wherein the a regions are in shapes of lines, characters, letters, numerals or images.

12. A fabric produced by a production process according to any one of claims 1 to 11.

13. A fabric according to claim 12, wherein the woven or knitted density is in the range of 180-360/2.54 cm warp and 150-360/2.54 cm weft.

14. A fabric according to claim 12, wherein the difference ΔRR between the 60 degree mirror reflectivity and 20 degree mirror reflectivity is 7.0 or greater, the 60 degree mirror reflectivity and 20 degree mirror reflectivity being defined as the mirror reflectivities at a measuring angle of 60 degrees and a measuring angle of 20 degrees, respectively, determined using a PG-1M glossmeter by Nihon Kogyo Co., Ltd. according to JIS-Z8741, and ΔRR is calculated by the following formula.

$$\Delta RR = (60\ degree\ mirror\ reflectivity) - (20\ degree\ mirror\ reflectivity)$$

15. A fabric according to claim 12, wherein the a regions have a textile density of 150-360/2.54 cm as the warp density and 150-360/2.54 cm as the weft density.

16. A fabric according to claim 12, wherein the organic fiber A and/or the organic fiber A and organic fiber B are heat sealed at the a regions.

17. A fabric according to claim 12, wherein the surface roughness at the a regions is no greater than 700 nm, the surface roughness being defined as the difference in heights of adjacent hills and valleys, calculated as the average value of 4 arbitrarily selected and measured locations.

18. A fiber product composed of a fabric according to any one of claims 12 to 17, and selected from among sportswear, inner wear, men's wear, women's wear, interior chair upholstery, interior curtains, automobile ceiling materials, automobile side materials, automobile sidings, automobile headrests, automobile sun visors, automobile sheets, wallets, shoe coverings, general purpose belts, handbags, electrical appliance casings and umbrella cloths.

# Fig.1

# Fig.2

# Fig.3

# Fig.4

a REGION       b REGION

80 SATIN WARP    64 GABARDINE WARP

# Fig.5

# Fig.6

[Explanation of Symbols]

1: Island component polymer reservoir before dispensing

2: Discharge hole for island component

3: Discharge hole for sea component

4: Sea component polymer reservoir before dispensing

5: Individual sea/island = sheath/core structure-forming section

6: Sea-island merging/squeezing section

11: a region

12: a region

13: a region

14: b region

15: b region

16: b region

17: b region

## INTERNATIONAL SEARCH REPORT

| International application No. |
| --- |
| PCT/JP2008/072221 |

A. CLASSIFICATION OF SUBJECT MATTER
*D06C15/00*(2006.01)i, *A41D31/00*(2006.01)i, *B60J3/02*(2006.01)i, *B60N2/44*
(2006.01)i, *B60R13/02*(2006.01)i, *D03D15/00*(2006.01)i

According to International Patent Classification (IPC) or to both national classification and IPC

B. FIELDS SEARCHED

Minimum documentation searched (classification system followed by classification symbols)
D06C15/00, A41D31/00, B60J3/02, B60N2/44, B60R13/02, D03D15/00

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 61-1546 B2  (Toray Industries, Inc.),<br>17 January, 1986 (17.01.86),<br>Claims<br>& JP 57-133266 A | 1-13,15-18<br>14 |
| Y | CD-ROM of the specification and drawings<br>annexed to the request of Japanese Utility<br>Model Application No. 55056/1993(Laid-open<br>No. 24984/1995)<br>(Toray Industries, Inc.),<br>12 May, 1995 (12.05.95),<br>Claims; Par. Nos. [0009], [0023] to [0026]<br>(Family: none) | 1-13,15-18 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   05 March, 2009 (05.03.09) | Date of mailing of the international search report<br>   17 March, 2009 (17.03.09) |
| --- | --- |
| Name and mailing address of the ISA/<br>   Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/072221

C (Continuation).    DOCUMENTS CONSIDERED TO BE RELEVANT

| Category* | Citation of document, with indication, where appropriate, of the relevant passages | Relevant to claim No. |
|---|---|---|
| P,X | JP 2008-169505 A  (Toray Industries, Inc.), 24 July, 2008 (24.07.08), Claims; Par. Nos. [0014], [0015], [0017], [0065] to [0067], [0086] (Family: none) | 1-13,15-18 |
| A | JP 6-71122 A  (Daiwabo Co., Ltd.), 15 March, 1994 (15.03.94), Claims; Figs. 1, 3 (Family: none) | 1 |
| A | JP 2001-162970 A  (Toray Industries, Inc.), 19 June, 2001 (19.06.01), Claims; Par. Nos. [0014], [0015] (Family: none) | 1 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61001546 A
- JP 2007291567 A
- JP 2003041432 A
- JP 2004162244 A
- JP 2005023466 A
- JP 2007002364 A
- JP 2004270097 A
- JP 2004211268 A